# EUROPEAN PATENT APPLICATION

(11) **EP 4 796 345 A1**
(43) Date of publication of application: **26.08.2026**
(21) Application number: 26158191.2
(22) Date of filing: 12.02.2026
(51) Int. Cl.: B60B 35/08, B60R 16/02, F16L 3/00, B60T 8/32, F16L 7/02

(54) **SENSOR GROUNDING WITHIN AN AXLE**

(30) Priority: 19.02.2025 US 202519057520
(71) Applicant: ArvinMeritor Technology, LLC, Troy, MI 48084 (US)
(72) Inventor: Catania, Stephen M., Troy, 48084 (US); Adkins, Alexander H., Troy, 48084 (US); Hackett, Bryan D., Troy, 48084 (US); Rodrigues, Paulo W., Troy, 48084 (US)
(74) Representative: Whitfield, Jack Stephen

(57) **Abstract**

An axle assembly (5) comprises a sensor (18) and provision of an electrical ground connection from a sensor to a vehicle ground potential in order to provide data about an axle (10) and/or a wheel hub connected to the axle. In particular, an inner surface (14) of an internal cavity (16) of an axle (10) is used as an electrical grounding point for a sensor (18), thereby protecting the ground connection and sensor from harsh environments. In an embodiment, an axle assembly (5) comprises a support member (12) adapted to be disposed within the interior cavity (16) of the axle (10), and the sensor (18) is operatively connected to said support member (12). The sensor (18) comprises an electrical ground input (20) electrically connected to a surface (14) of the axle (10) within the cavity (16). Such an axle assembly (5) may be provided as a constituent component in a vehicle.

## Description

### FIELD

This application claims priority to US Patent Application 19/057,520 filed at the USPTO on 19 February 2025 entitled "Sensor grounding within an axle". The present disclosure generally relates to sensors within an axle of a vehicle and, more particularly, to designs for providing a grounding electrical connection for sensors within an axle.

### BACKGROUND

In the domain of vehicles, particularly commercial vehicles, it is desirable to deploy one or more sensors (e.g., temperature and/or vibrations sensors) in proximity to a wheel end or wheel hub. In this manner, data may be obtained that can help in the prediction or detection of component failures within the wheel end or wheel hub. Durability and manufacturability of components are each important considerations when designing sensors in proximity to a wheel hub. Design of sensors to be deployed in proximity to a wheel hub is not easily solved given the difficulty in providing the wiring to such sensors and the inhospitable nature of the environment in which the sensors operate. Reliability of sensors usually depends, at least in part, upon the durability of the ground connection in the electric circuit of the sensor, which is one of the main failure points in harsh environments. Another failure point with the use of sensors in harsh environments is the complicated architecture of the wiring to the sensor that is required. While wireless sensor solutions have been proposed, which would have the benefit of eliminating the need to provide wiring to the sensors, such solutions incur the cost of additional wireless communication equipment and the potential need to replace batteries in wireless sensors.

Thus, solutions that mitigate such difficulties would be welcome additions to the art.

### SUMMARY

The present disclosure generally relates to sensors and the provision of an electrical ground connection from a sensor to a vehicle ground potential in order to provide data about an axle and/or a wheel hub connected to the axle. In particular, the use of an inner surface of an axle as the electrical grounding point for a sensor takes advantage of the protection of the ground and sensor provided by an internal cavity of the axle in harsh environments.

Thus, in an embodiment, an axle assembly comprises a support member adapted to be disposed within an interior cavity of an axle, and a sensor operatively connected to said support member. The sensor comprises an electrical ground input electrically connected to a surface of the axle within the cavity. Such an axle assembly may be provided as a constituent component in a vehicle.

Within such an embodiment, the support member may take many forms. For example, in an embodiment, the support member is an airline support member. In another embodiment, the support member comprises an axle plug. In this case, the axle plug may further comprise any of: a bolt, a clip, a press fit tube or a grommet that mounts to the axle plug, where each such bolt, clip, press fit tube or grommet is adapted to receive the sensor.

In another embodiment, the axle plug comprises a central portion and a peripheral portion, wherein at least the peripheral portion is adapted to establish electrical contact with the axle and wherein the sensor electrical ground input is in electrical communication with the peripheral portion. In this embodiment, the peripheral portion can be made of an electrically conductive material. Further to this embodiment, the central portion of the axle plug may be integral with the peripheral portion and made of the electrically conductive material. In this case, the central portion may be adapted to receive the sensor, wherein the electrical ground input is in electrical communication with the central portion and peripheral portion. In an embodiment, the sensor can be embedded in the central portion of the axle plug.

### BRIEF DESCRIPTION OF THE DRAWINGS

The foregoing and other features and advantages will be discussed in detail in the following non-limiting description of specific embodiments in connection with the accompanying drawings, in which:
Fig. 1 shows a cross-sectional schematic view of an axle assembly, specifically an inside of an axle with a sensor connected to a support member according to the instant disclosure.
Fig. 2 shows a cross-sectional schematic view of an axle assembly, specifically an inside of an axle with a sensor connected to an alternative support member according to the instant disclosure.
Fig. 3A shows a cross-sectional schematic view of an inside of an axle with a sensor connected to an axle plug comprising a bolt according to the instant disclosure.
Fig. 3B shows a rear perspective view of the axle plug and bolt of Fig. 3A according to the instant disclosure.
Fig. 3C shows a perspective view of the bolt according to Figs. 3A and 3B according to the instant disclosure.
Figs. 4A and 4B show respective top and bottom perspective views of a clip disposed on an axle plug according to the instant disclosure.
Figs. 5A and 5B show respective top and bottom perspective views of a press fit tube disposed on an axle plug according to the instant disclosure.
Fig. 6A shows a perspective view of a grommet for use with an axle plug according to the instant disclosure.
Fig. 6B shows a perspective view of a grommet according to FIG. 7A disposed on an axle plug according to the instant disclosure.
Fig. 7 shows a cross-section and perspective schematic view of a sensor directly mounted on an axle plug according to the instant disclosure.
Fig. 8 shows a vehicle comprising an axle assembly according to the instant disclosure.

### DETAILED DESCRIPTION OF THE PRESENT EMBODIMENTS

As used herein, phrases substantially similar to "at least one of A, B or C" are intended to be interpreted in the disjunctive, i.e., to require A or B or C or any combination thereof unless stated or implied by context otherwise. Further, phrases substantially similar to "at least one of A, B and C" are intended to be interpreted in the conjunctive, i.e., to require at least one of A, at least one of B and at least one of C unless stated or implied by context otherwise. Further still, the term "substantially" or similar words requiring subjective comparison are intended to mean "within manufacturing tolerances" unless stated or implied by context otherwise.

As used herein, the phrase "operatively connected" refers to at least a functional relationship between two elements and may encompass configurations in which the two elements are directed connected to each other, i.e., without any intervening elements, or indirectly connected to each other, i.e., with intervening elements.

For the purpose of promoting an understanding of the principles of the disclosure, reference will now be made to the embodiments illustrated in the drawings, which are described below. It will nevertheless be understood that no limitation of the scope of the disclosure is thereby intended. The disclosure includes any alterations and further modifications in the illustrated device and described methods and further applications of the principles of the disclosure, which would normally occur to one skilled in the art to which the disclosure relates. Moreover, the embodiments were selected for description to enable one of ordinary skill in the art to practice the disclosure.

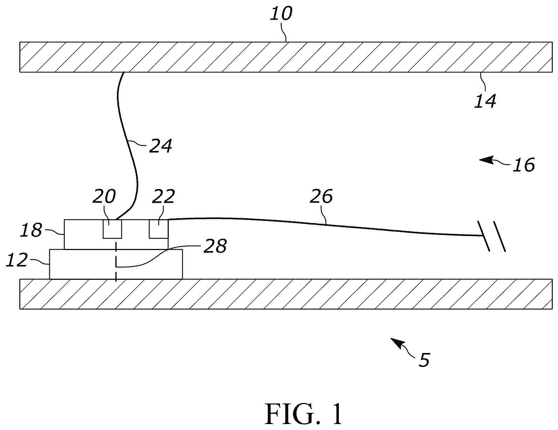

Fig. 1 shows a cross-sectional schematic of an axle assembly 5, particularly illustrating an inside portion of an axle 10 used with a vehicle (not shown) such as a passenger car, light/medium/heavy duty truck, service vehicle, etc. As known in the art, such axles 10 are typically hollow and comprise an interior cavity 16 formed therein that defines an inner surface 14. In this embodiment, a sensor support member 12 is operatively connected to the inner surface 14 of the interior cavity 16 of the axle 10. In turn, a sensor 18 is operatively connected to the sensor support member 12 as a way of securing the sensor 18 within the axle 10. Throughout the instant disclosure, any of the illustrated sensors may comprise any of a variety of sensor types, including but not limited to temperature, humidity, fluid or vibration sensors or combinations thereof.

As will be appreciated by those skilled in the art, various techniques may be used to operatively connect the support member 12 to the inner surface 14. For example, the support member 12 may be welded or bolted to the inner surface 14. Alternatively, various adhesives may be used for this purpose. Further, such adhesives may be selected to enhance operation of the sensor 18, e.g., where the sensor 18 comprises a temperature sensor, the adhesive may be selected to either be highly conductive of heat, as in the case where temperature of the axle 10 itself is important, or highly resistive to conducting heat, as in the case where isolation of a temperature sensor relative to the axle 10 is desired. In a similar vein, those skilled in the art will appreciate that various techniques may be used to operatively connect the sensor 18 to the support member 12. For example, the support member 12 may be configured to receive and mechanically retain the sensor 18 in a fixed position relative to the support member 12, e.g., via press fitting, mating attachment elements, screws, clips, etc. Various examples of such an embodiment are described in further detail below. Additionally or alternatively, suitable adhesives may be used for operatively connecting the sensor 18 to the support member 12.

The sensor 18 includes an electrical ground input 20 electrically connected to the inner surface 14 of the axle 10 by a ground conductor 20 between the ground input 20 and the inner surface 14 to provide the required grounding by the sensor 18 to operate. Additionally, a power conductor 26 is electrically connected to a power input 22 of the sensor 18 as well as a power source (not shown) for the sensor. The power conductor 26, which typically comprises an insulated wire, is routed through the cavity 16 of the axle 10 in accordance with known techniques. As described in connection with further embodiments described below, electrical connection of the ground input 20 to the axle 10 via the inner surface need not be restricted to a discrete electrical conductor 24 such as an insulated wire, and may instead be accomplished through an integral conductive path 28 formed as part of the support member 12. Regardless of its implementation, provision of a ground conductor 24, 28 between the ground input 20 of the sensor 18 and the axle 10 takes advantage of the fact that the axle 10 is in electrical communication with the chassis of the vehicle, which typically serves as the ground potential for all electrical systems in the vehicle. In turn, this has the advantage of eliminating the need for a separate conductor to be routed through the cavity 16 back toward the power source, thereby simplifying fabrication of the axle assembly 5 and reducing potential points of failure.

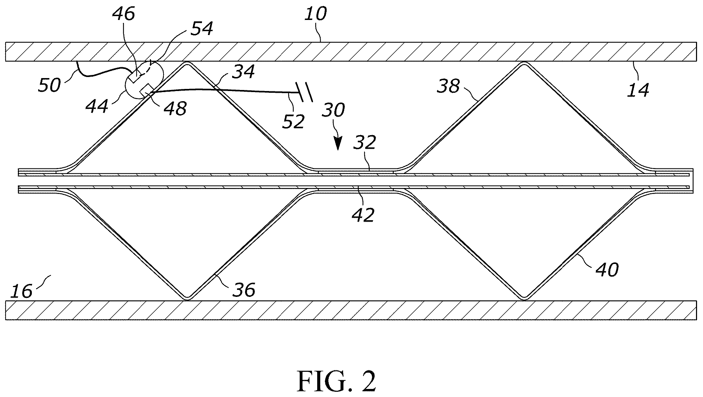

FIG. 2 illustrates a cross-sectional schematic view of an axle assembly, specifically an inside of an axle with a sensor connected to an alternative support member 30 according to the instant disclosure. In particular, the alternative support member 30 is an expandable structure of the type described in U.S. Patent Application No. 18/907,943 (assigned to ArvinMeritor Technology, LLC; "the '943 application"). As described in the '943 application, the support member 30 comprises a conduit 32 configured such that, when placed under compression, a plurality of arms 34, 36, 38, 40 extend away from the conduit 32 and thereby come into contact the inner surface 14 of the axle 10. In this manner, the arms 34, 36, 38, 40 substantially center the conduit 32 within the cavity 16. A line 42 schematically illustrates various elements that may be routed through the conduit 32, such as a tube for routing air or other fluids, electrical wires, combinations of both, etc. As a result, any vibrations of, or excessive thermal effects occurring to, the axle 10 are absorbed, or at least minimized, by the support member 30, thereby also minimizing any chance of damage to the line 42. Although all of the depicted arms 34, 36, 38, 40 are shown in contact with the inner surface 14, this is not a requirement, i.e., not all of the arms need contact the inner surface. provided that the line 42 is not permitted to contact the inner surface 14. Preferably, the plurality of arms 34, 36, 38, 40 are configured to contact the inner surface 14, with sufficient force and resulting friction so as to retain the support member 30 in its final position along the length of the cavity 16.

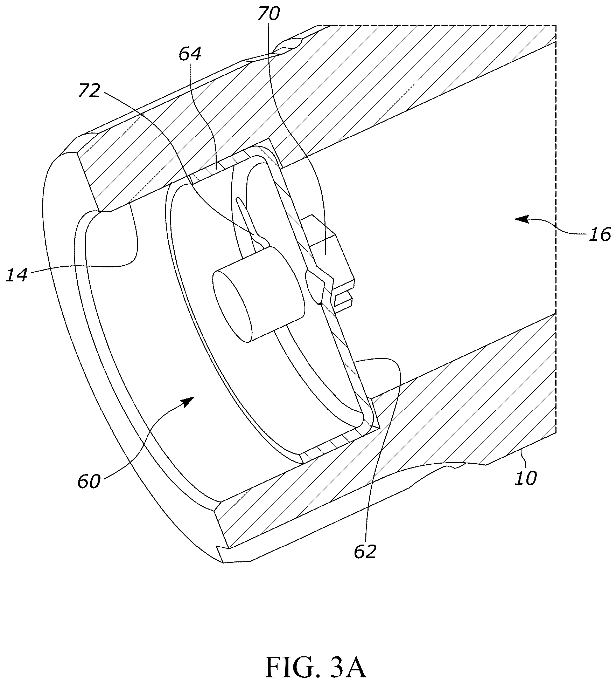

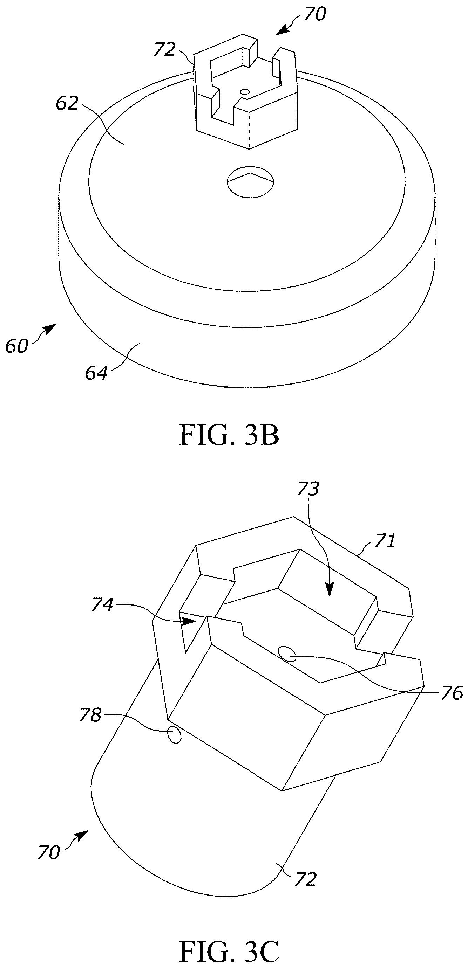

FIG. 2 further illustrates a schematically-depicted sensor 44 deployed on the support member 30, specifically, one of the arms 34. Although a single sensor 44 is illustrated in FIG. 3, it is appreciated that more than one sensor 44 could be deployed on a given support member 30. The sensor 44 may be attached (permanently or removably so) to the support member 30 using a suitable adhesive, mechanical fastener, etc. or combinations thereof. Furthermore, the support member 30 may be configured to include structures (e.g., holes, flanges, notches, etc.; not shown) configured to facilitate attachment of the one or more sensors 44 to the support member 30.

Similar to Fig. 1, the axle assembly depicted in Fig. 2 includes a ground conductor 50 configured to electrically connect a ground input 46 of the sensor 44 to the inner surface 14 of the axle 10. In an alternative embodiment, an integrally formed ground conductor 54 may be configured to electrically connect the ground input 46 to the inner surface 14, particularly in the case where the sensor 44 itself is biased into contact with the inner surface 14. Likewise, a power conductor 52 electrically connects a power input 48 of the sensor 44 to a power source (not shown).

As shown, the sensor 44 is deployed at or near the apex (relative to the central conduit 32) of arm 34 such that the sensor 44 is able to make contact with the inner surface 14. In an embodiment, placement of the sensor 44 at or near the apex of any of the arms 34, 36, 38, 40 permits the force supplied by the extension of the arm to bias the sensor 44 into contact with the inner surface 14. This is particularly useful in those instances where one or more parameters of the axle 10, or other components in proximity to the axle 10 (e.g., wheel bearings) are to be measured by the sensor 44. Although the sensor 44 is depicted as being deployed near the apex of the arm 34, this is not a requirement and locations of the sensors 44 on the support member 30 may vary as a function of the application. As used herein relative to the one or more sensors 44, sufficient "proximity" may be determined by the capabilities of the given sensor, i.e., a sensor is in proximity to a given location if its deployment is sufficiently close to achieve the desired sensing operation. For example, it may be desirable to sense excessive heat or vibrations that may be generated during early stages of failure of a wheel bearing. In this case, positioning of the sensor 44 in contact with the axle 10 at an end where the axle is attached to the wheel could permit detection of such conditions. Alternatively, if temperature presented within the cavity 16 along the line 42 is a desirable parameter to be measured, then the sensor(s) 44 could be deployed on the support member 30 so as to be in proximity to, or even in contact with, the line 42.

Figs. 3A and 3B show an axle plug 60 configured to serve as a portion of sensor support member. As known in the art, axle plugs are inserted into an open end of a cavity 16 of an axle 10, thereby providing a fluid-tight seal for the cavity 16. For example, such axle plugs are typically press-fitted in the open end of the cavity 16, though they may also be attached in other ways, e.g., a threaded connection, welding, etc. In the illustrated example, the axle plug 60 is inserted in a counterbored section of the cavity 16 such that insertion of the axle plug 60 is limited by a shoulder forming a terminal surface of the counterbore. The axle plug 60 is formed in a cup-like shape having a central portion 62 and a peripheral portion 64 extending axially away from the central portion 62. Preferably, the central and peripheral portions 62, 64 are fabricated as an integral unit. Further, both the central and peripheral portions 62, 64 may be fabricated from an electrically conductive material such that, when the axle plug 60 is brought into contact with the inner surface 14 of the axle 10, the axle plug 60 is electrically grounded. However, it is appreciated that the axle plug 60 need not be electrically conductive and could be fabricated from other, electrically insulating materials, e.g., steel with electrically insulating coatings.

In addition to the axle plug 60, the support member illustrated in Fig. 3 comprises a bolt 70 mounted in an opening in the central portion 62 of the axle plug 60. As shown in Fig. 3C, the bolt 70 comprises a bolt head 71 and bolt body 72. The bolt body 72 is configured to be mounted in the opening (not shown) in the central portion 62 of the axle plug 60 such that, when the axle plug 60 is inserted in the cavity 16 (as shown in Fig. 3A), the bolt head 71 will reside within the sealed portion of the cavity 16. For mounting on the central portion 62, the bolt body 72 may be, for example, threaded for mating engagement with corresponding threads in the opening, or may be configured for press fitting into the opening. As shown in Figs. 3A and 3B, the bolt 70 is mounted off-center on the central portion 62, though this is not a requirement. As shown, the bolt head 71 may have a hexagonal configuration in accordance with well-known standards. Preferably, the bolt head 71 is configured to include a sensor mounting feature 74 that permits a sensor to be attached thereto. In the illustrated example, the sensor mounting feature 74 comprises an opening 73 and/or notch 74 formed in the bolt head 71 and configured to receive a sensor.

In an embodiment, the bolt 70 and the axle plug 60 are both fabricated from an electrically conductive material such that, when the support member comprising the axle plug 60 and bolt 70 is mounted in the cavity 16 as depicted in Fig. 3A, an electrically conductive ground path is provided by the axle plug 60 and bolt 70. In this case, the sensor can be mounted to the bolt head 71 such that a ground input of the sensor is placed in electrical contact with the bolt head 71 and thereby electrically connected to the ground potential provided by the axle 10. In another embodiment, the bolt 70 may be fabricated from an electrically insulative material, and yet comprise an integrally formed ground conductor configured to establish an electrical connection with both the axle plug 60 (itself fabricated from an electrically conductive material) when the bolt 70 is mounted on the axle plug 60 and a ground input of a sensor when the sensor is mounted on the bolt 70. In yet another embodiment, and as best shown in Fig. 3C, the bolt head 71 and bolt body 72 may comprise connected passages 76, 78 that provide a path for a discrete electrical conductor 72 (Fig. 3a), such as an insulated wire, to be passed through the bolt 70 from a side of the central portion 62 on which the sensor is deployed to an opposite side of the central portion 62 along which the peripheral portion 64 extends. In this case, if at least the peripheral portion 64 is electrically conductive, the electrical conductor 72, which is operatively connected to a ground input of the sensor, may also be electrically connected to the peripheral portion 64 thus providing electrical grounding of the sensor.

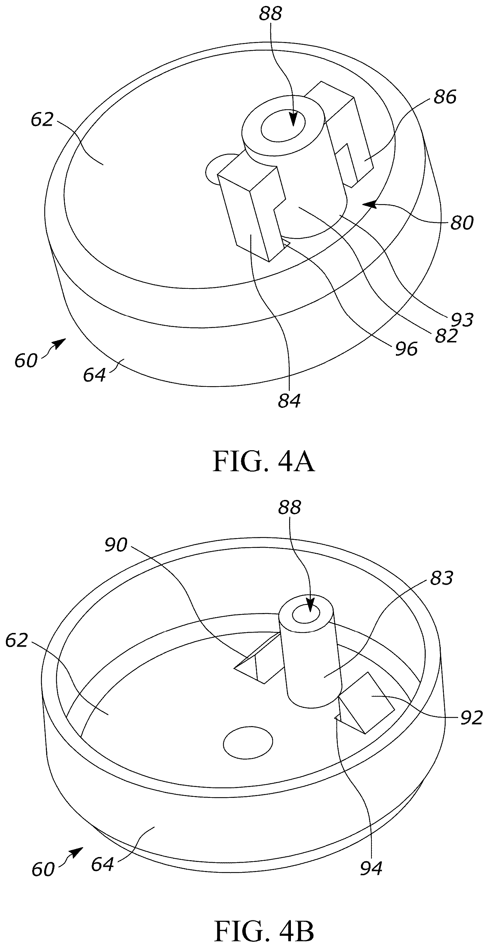

Figs. 4-6 show different embodiments of components that may be attached to the central portion 62 of the axle plug 60 for the attachment of a sensor. As with the embodiment described above relative to Figs. 3A-3C, each of the components illustrated in Figs. 4-6 for mounting on the axle plug 60 may be fabricated from an insulative or electrically conductive material and, in the latter case where the axle plug 60 is also fabricated from an electrically conductive material, establish an electrical ground path for a sensor attached to the component. Alternatively, each of the components illustrated in Figs. 4-6 may be configured to permit passage of a discrete ground conductor for the sensor, or may comprise an integrally formed ground conductor as described above.

Figs. 4A and 4B illustrate a support member comprising the axle plug 60 in combination with a press fit tube 80 attached to the central portion 62. In this embodiment, the press fit tube 80 comprises a tubular body having an upper tube portion 82 and a lower tube portion 83, with two cantilevered arms 84, 86 apart from and extending substantially parallel to the upper tube portion 82. The upper tube portion 82 has a larger diameter than the lower tube portion 83. Each of the arms 84, 86 terminates in a substantially perpendicularly extending finger 90, 92. The axle plug 60 in this embodiment includes a central opening 93 configured to receive and permit passage of the lower tube portion 83 but not the upper tube portion 82, thereby establishing a stop for insertion of the press fit tube 80 into the central portion 62. The axle plug 60 also comprises two lateral openings 94, 96 formed opposite each other on either side of the central opening 93. The lateral openings 94, 96 are configured to receive the respective fingers 90, 92 such that the corresponding arms are caused to flex inwardly until the fingers 90, 92 have fully passed through the lateral openings 94, 96. The fingers 90, 92 are configured at distance along each arm 84, 86 such that they fully pass through the respective lateral openings 94, 96 when the upper tube portion abuts the central portion 62, at which time clearance of the fingers 90, 92 will allow the arms 84, 86 to return to their relaxed position. In this manner, the fingers 90, 92 ensure continuous attachment of the press fit tube 80 to the central portion 62.

As further shown in Figs. 4A and 4B, the upper and lower tube portions 82, 83 may have a passage 88 formed therein, which may be configured to both receive a sensor and to permit a ground conductor (operatively connected to a ground input of the sensor) to pass through the press fit tube 80 such that it can also be electrically connected to an inner surface of an axle as described above. Alternatively, though not depicted in Figs. 4A and 4B, in the case where the axle plug 60 is fabricated from an electrically conductive material, either the upper tubular body 82 or one of the arms 84, 86 may comprise an integrally formed ground conductor configured to make electrical contact with the central portion 62, and to make electrical contact with a ground input of a sensor disposed within the passage 88.

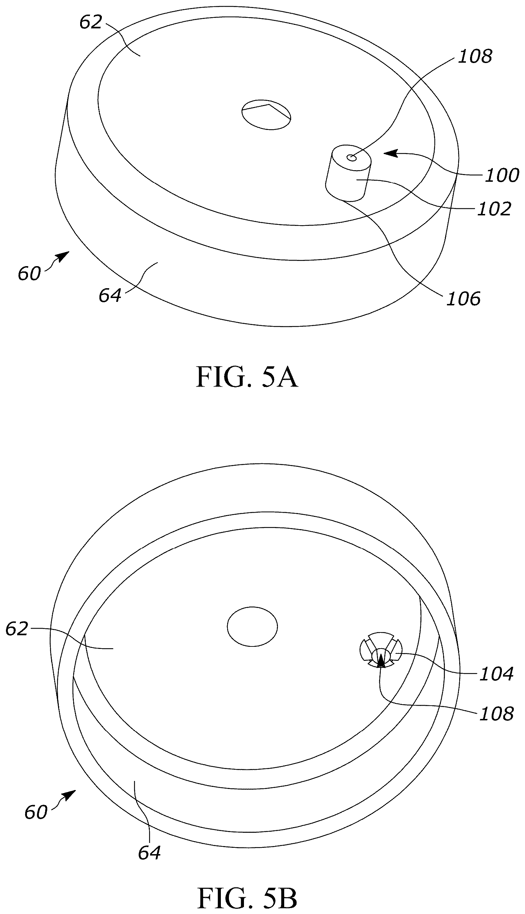

Figs. 5A and 5B illustrate another embodiment of a press fit tube 100 for use with the axle plug 60. In this embodiment, the press fit tube 100 comprises a tubular body 102 and, in this embodiment, four axially extending arms 104 terminating in fingers in a manner substantially similar to the embodiment of Figs. 4A and 4B. The tubular body 102 is once again configured to have a diameter greater than an opening 106 formed in the central portion 62, thereby limiting insertion of the press fit tube 100 into the opening 106. In this case, however, the arms 104 (four depicted in Fig. 5B) are configured to be inserted in the opening 106 such the fingers may once again retain the press fit tube 100 in its attached relationship to the axle plug 60. In the illustrated embodiment, the tubular body and arms 104 have a passage 108 formed therein permitting mounting of a sensor and/or passage of a ground conductor through the press fit tube 100 as described above. Alternatively, though not depicted in Figs. 5A and 5B, in the case where the axle plug 60 is fabricated from an electrically conductive material, either the tubular body 102 or one of the arms 104 may comprise an integrally formed ground conductor configured to make electrical contact with the central portion 62, and to make electrical contact with a ground input of a sensor attached to the press fit tube 100.

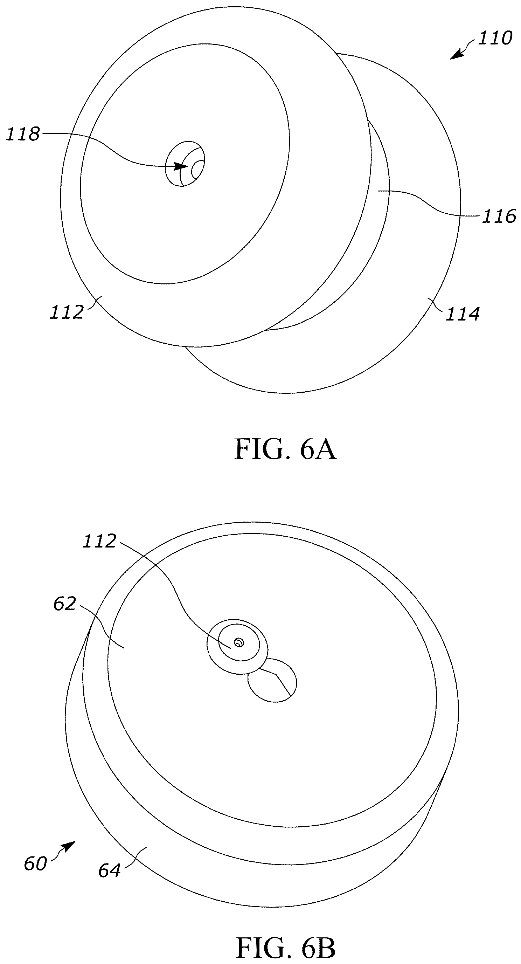

Fig. 6A and 6B illustrate an embodiment of a grommet 110 for use with the axle plug 60. In accordance with known techniques, the grommet 110 may be fabricated from a suitable elastomer (e.g., rubber) or suitable flexible plastic. In this embodiment, the grommet 110 comprises two circular ends 112, 114 with a tapered body 116 connecting the circular ends 112, 114. Each of the two circular ends 112, 114 had a diameter greater than an opening (not shown) formed in the central portion 62. In this manner, one of the circular ends 112 may be deformed when inserting the grommet 110 into the opening in the central portion 62. Once inserted, return of the deformed circular end 112 to its original shape, as well as centering of the tapered body in the opening, ensures attachment of the grommet 110 to the central portion 62. As with the previously described embodiments, provision of a passage 118 through the grommet 110 permits mounting of a sensor and/or passage of a ground conductor through the grommet 110 as described above. Alternatively, though not depicted in Figs. 6A and 6B, in the case where the axle plug 60 is fabricated from an electrically conductive material, grommet 110 may comprise an integrally formed ground conductor configured to make electrical contact with the central portion 62, and to make electrical contact with a ground input of a sensor attached to grommet 110.

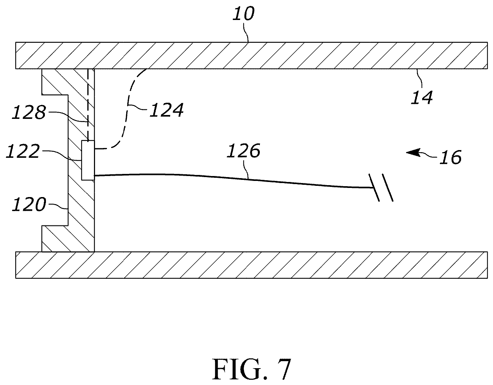

Fig. 7 illustrates an embodiment of an axle assembly comprising an axle plug 120 having a sensor 122 directly mounted thereon, rather than through the use of an intervening element, such as the bolts, press tubes or grommets described above. For example, the sensor 122 may be configured to be press fitted into an opening formed in the axle plug 120, as shown in Fig. 7. In this case, and where the axle plug 120 is fabricated from an electrically conductive material, a ground input of the sensor 122 may be configured such that electrical contact between the axle plug 122 and the ground input is established when the sensor 122 is press fitted into the axle plug 120. In this manner, only a single power conductor 126 is needed to extend from the sensor 122, as shown. In the case where the sensor 122 is not configured to establish electrical ground contact despite the use of an electrically conductive axle plug 120, a discrete ground conductor 124 may be optionally employed. Further still, in the case where the axle plug 120 is not fabricated from an electrically conductive material, either the use of the discrete ground conductor 124 may be employed or a ground conductor 128 integrally formed in the axle plug 120 may be employed in a manner similar to the integral ground conductor 28 depicted in Fig. 1.

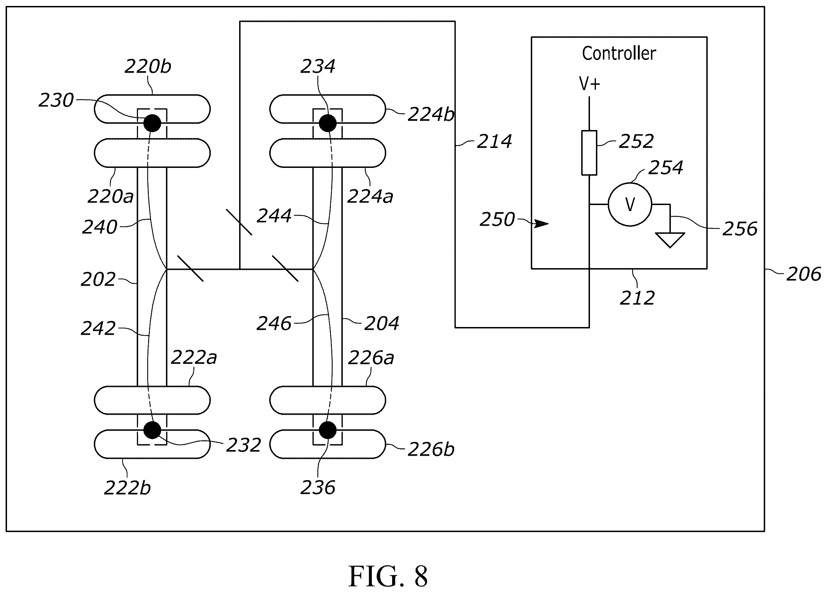

Referring now to Fig. 8, a vehicle 206 comprising an axle assemblies according to the instant disclosure is depicted. In the illustrated example, the vehicle 206, which may comprise any type of vehicle having axles as described herein, includes a first axle 202 and a second axle 204. While only two axles 202, 204 are shown, it is understood that additional or fewer axles could be used to support the vehicle 206.

The vehicle 206 comprises a controller 212, which may be implemented as a suitable processing device such as an engine control unit (ECU) or the like as known in the art, along with any additional components (e.g., the voltage divider circuits 250 described below) required by this example. As described above, each of the first 202 and second 204 axles defines a sealed inner cavity. The first axle 102 has a first set of wheels 220a, 220b mounted on one end of the axle 202 and a second set of wheels 222a, 222b mounted on an opposite end of the axle 102. Similarly, the second axle 204 has a first set of wheels 224a, 224b mounted on one end of the axle 204 and a second set of wheels 226a, 226b mounted on an opposite end of the axle 204. Although each of the first 220, 224 and second 222, 226 sets of wheels are illustrated comprising two tires per set, it is appreciated that this is not a requirement.

As schematically shown, axle assemblies 230, 232, 234, 236 in accordance with the instant disclosure are deployed at respective ends of each axle 202, 204. Each of the axle assemblies 230, 232, 234, 236 is in electrical communication with the controller 212 via a respective power conductor 240, 242, 244, 246 routed through the axles 202, 204 as well as a suitable conduit 214 operatively connected to the axles 202, 204 and the controller 212.

Fig. 8 further illustrates a technique for operating the axle assemblies 230, 232, 234, 236. In particular, the illustrated example is suitable for those instances in which the sensor deployed in each of the axle assemblies 230, 232, 234, 236 provides a measurable varying characteristic that can be represented as a voltage as an indicator of the detected parameter, such as a varying resistance of a thermistor used to detect temperature changes. In this case, the power conductors 240, 242, 244, 246 for each of the axle assemblies 230, 232, 234, 236 is electrically coupled to a voltage divider circuit 250 (only one depicted in Fig. 8). Each voltage divider circuit 250 comprises a pull up resistor 252 electrically in series with the thermistor and a power source (V+) for the thermistor. A voltage meter 254 measures a voltage at the node between the thermistor and pull up resistor 252 relative to a chassis ground potential 256, i.e., the same ground potential provided to the sensors by the axle assemblies 230, 232, 234, 236 as described above. As known in the art, and assuming the nominal resistance value of the thermistor (i.e., when not exposed to temperature variations) and the pull up resistor 252 are known, the voltage measured by the voltage meter 254 will be dependent upon any changes in resistance in the thermistor and, therefore, also indicative of any temperature changes experienced by the thermistor. By monitoring such voltage variations, the controller 212 can continuously monitor, in this example, any temperature variations at the axle assemblies 230, 232, 234, 236.

While the various embodiments in accordance with the instant disclosure have been described in conjunction with specific implementations thereof, it is evident that many alternatives, modifications and variations will be apparent to those skilled in the art. Accordingly, the preferred embodiments of the invention as set forth herein are intended to be illustrative only and not limiting so long as the variations thereof come within the scope of the appended claims and their equivalents.

## Claims

1. An axle assembly comprising:
a support member adapted to be disposed within an interior cavity of an axle; and
a sensor operatively connected to said support member, wherein said sensor comprises an electrical ground input electrically connected to a surface of the axle within the cavity.

2. The axle assembly of claim 1, wherein said support member is an airline support member.

3. The axle assembly of claim 1, wherein said support member is an axle plug.

4. The axle assembly of claim 3, wherein said support member comprises a bolt that mounts to said axle plug and said bolt is adapted to receive the sensor.

5. The axle assembly of claim 3, wherein said support member comprises a press fit tube that mounts to said axle plug and said press fit tube is adapted to receive the sensor.

6. The axle assembly of claim 3, wherein said support member comprises a grommet that mounts to said axle plug and said grommet is adapted to receive the sensor.

7. The axle assembly of claim 3, wherein said axle plug comprises a central portion and a peripheral portion, wherein at least the peripheral portion is adapted to establish electrical contact with the axle and wherein the sensor electrical ground input is in electrical communication with the peripheral portion.

8. The axle assembly of claim 7, wherein said peripheral portion is made of an electrically conductive material.

9. The axle assembly of claim 8, wherein said central portion is integral with said peripheral portion and made of said electrically conductive material.

10. The axle assembly of claim 9, wherein said central portion is adapted to receive the sensor, wherein said electrical ground input is in electrical communication with said central portion and peripheral portion.

11. The axle assembly of claim 7, wherein said sensor is directly mounted on said central portion.

12. A vehicle comprising:
an axle; and
the axle assembly of claim 1 mounted on the axle.
